# EUROPEAN PATENT SPECIFICATION

(11) **EP 3 290 229 B1**
(45) Date of publication and mention of the grant of the patent: **26.06.2019**
(21) Application number: 16786258.0
(22) Date of filing: 29.03.2016
(51) Int. Cl.: B60C 9/20, B60C 9/18, B60C 9/22, B60C 5/01

(54) **TIRE**
REIFEN
PNEUMATIQUE

(30) Priority: 27.04.2015 JP 2015090499
(43) Date of publication of application: 07.03.2018
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2016/060205
(87) International publication number: WO 2016/174981

(56) References cited:
- EP-A1- 0 023 848
- EP-A1- 2 987 650
- WO-A1-2014/171462
- WO-A1-2015/005172
- JP-A- S5 911 901
- JP-A- H03 143 701
- JP-A- 2011 042 236
- JP-A- 2011 042 238
- JP-A- 2011 042 238
- JP-A- 2012 046 024
- JP-A- 2014 205 462
- JP-A- 2015 039 903

## Description

### Technical Field

The present invention relates to a tire, and in particular, a tire having a tire frame member formed using a resin material.

### Background Art

In recent years, there has been demand for the use of resin materials (for example thermoplastic resins and thermoplastic elastomers) as tire materials, from the perspectives of weight reduction, ease of molding, and ease of recycling.

Japanese Patent Application Laid-Open (JP-A) No. H03-143701 describes a tire in which a reinforcing layer formed by rubber-covered reinforcing cords, and a rubber tread, are laid over a flat crown portion of a resin tire frame member. Reference is also made to WO 2014/171462 A1 which discloses a tire according to the preamble of claim 1.

### SUMMARY OF INVENTION

### Technical Problem

In the tire described in JP-A No. H03-143701, a difference in rigidity arises between the resin tire frame member and the rubber-containing reinforcing layer. When tire width direction force is input to the tread during cornering and the like, the rubber configuring the reinforcing layer undergoes elastic deformation with the tread, such that the reinforcing layer moves in the tire width direction with respect to the tire frame member. Depending on the magnitude of the tire width direction input, there could therefore be a possibility of an excessive separation force arising between the tire frame member and the reinforcing layer.

In consideration of the above circumstances, an object of the present invention is to provide a tire capable of suppressing an excessive separation force from arising between a rubber-containing reinforcing layer and a tire frame member formed from a resin material in response to tire width direction input.

### Solution to Problem

A tire of a first aspect of the present invention includes a tire frame member, a reinforcing layer, and a housing recess. The tire frame member is circular and is formed from a resin material. The tire frame member includes a bead portion, a side portion continuous with a tire radial direction outer side of the bead portion, and a crown portion continuous with a tire width direction inner side of the side portion. The reinforcing layer is provided at a tire radial direction outer side of the crown portion, and is formed by covering, with rubber, a reinforcing cord extending in a direction intersecting the tire width direction. The housing recess is formed in the crown portion and extends in a tire circumferential direction. At least an inner circumferential portion of the reinforcing layer is housed in the housing recess with side faces of the reinforcing layer contacting recess wall faces on both tire width direction sides of the housing recess. The tire further comprises a cover layer that is formed by covering a plurality of cover cords with rubber, that extends from the bead portion to the side portion, and that covers an outer face of the side portion.

In the tire of the first aspect, the housing recess in the crown portion houses at least the inner circumferential portion of the reinforcing layer. The side faces of the reinforcing layer respectively contact the recess wall faces on both tire width direction sides of the housing recess. The tire is thus more capable of suppressing tire width direction movement of the reinforcing layer caused by elastic deformation of the rubber configuring the reinforcing layer (rubber covering the reinforcing cord) in response to tire width direction input than, for example, a configuration in which the reinforcing layer is provided on a flat crown portion.

This thereby enables an excessive separation force to be suppressed from arising between the rubber-containing reinforcing layer and the tire frame member that is formed from a resin material in response to tire width direction input.

In addition, in the tire of the first aspect, the outer face of the side portion is covered by the cover layer formed by covering plural cover cords with rubber. The cut resistance performance and weather resistance of the side portion is thereby improved in comparison to, for example, a configuration in which the outer face of the side portion is not covered with the cover layer.

A tire of a second aspect of the present invention is the tire of the first aspect, wherein a depth of the housing recess is no greater than a thickness of the reinforcing layer.

In the tire of the second aspect, the depth of the housing recess is no greater than the thickness of the reinforcing layer. Thus, a reduction in rigidity resulting from thinner locations corresponding to the housing recess of the crown portion is suppressed in comparison to configurations in which, for example, the depth of the housing recess is exceeding the thickness of the reinforcing layer.

A tire of a third aspect of the present invention is the tire of the second aspect, wherein the depth of the housing recess exceeds a length along the tire radial direction from an inner circumferential face of the reinforcing layer to a tire radial direction inner side end portion of the reinforcing cord.

In the tire of the third aspect, the depth of the housing recess exceeds the tire radial direction length from the inner circumferential face of the reinforcing layer to the tire radial direction inner side end portion of the reinforcing cord. This thereby enables movement of the reinforcing cord due to elastic deformation of the rubber configuring the reinforcing layer in response to tire width direction input to be suppressed. This thereby enables an excessive separation force to be effectively suppressed from arising between the tire frame member and the reinforcing layer in response to tire width direction input.

A tire of a fourth aspect of the present invention is the tire of any one of the first aspect to the third aspect, wherein the reinforcing layer is formed by winding the rubber-covered reinforcing cord in a tire circumferential direction to form a spiral pattern.

In the tire of the fourth aspect, the reinforcing layer is formed by winding the rubber-covered reinforcing cord in the tire circumferential direction within the housing recess to form a spiral pattern. This thereby improves the tire circumferential direction rigidity of the crown portion.

A tire of a fifth aspect of the present invention is the tire of the fourth aspect, wherein, as viewed from the tire radial direction outer side of the crown portion, the recess wall faces are inclined in the same direction as the reinforcing cord with respect to the tire circumferential direction.

In the tire of the fifth aspect, the recess wall faces are inclined in the same direction as the reinforcing cord with respect to the tire circumferential direction, such that a spacing (in other words, the thickness of the rubber) between the recess wall faces and the reinforcing cord is substantially uniform. Accordingly, in the tire, the advantageous effect of suppressing movement of the reinforcing cord caused by elastic deformation of the rubber configuring the reinforcing layer in response to tire width direction input is greater than in a configuration in which, for example, the recess wall faces are inclined in a different direction than the reinforcing cord with respect to the tire circumferential direction. This thereby enables an excessive separation force to be effectively suppressed from arising between the tire frame member and the reinforcing layer in response to tire width direction input.

### Advantageous Effects of Invention

As described above, the present invention is capable of providing a tire capable of suppressing an excessive separation force from arising between a tire frame member formed from a resin material and a rubber-containing reinforcing layer in response to tire width direction input.

### BRIEF DESCRIPTION OF DRAWINGS

Fig. 1 is a cross-section of a tire according to a first exemplary embodiment, which does not belong to the present invention, taken along a tire width direction.
Fig. 2 is an enlarged cross-section of the portion of the tire indicated by arrow 2 in Fig. 1.
Fig. 3 is a plan view of a reinforcing layer and a tire frame member of the tire of Fig. 1, as viewed from a tire radial direction outer side.
Fig. 4 is a perspective view illustrating a tire width direction cross-section of a tire frame member employed in a tire according to the first exemplary embodiment, and illustrates a state in which a reinforcing cord has been wound onto the tire frame member.
Fig. 5 is a cross-section of a modified example of a reinforcing layer employed in a tire according to the first exemplary embodiment, taken along the tire width direction.
Fig. 6 is a cross-section of a tire according to a second exemplary embodiment, taken along the tire width direction.
Fig. 7 is a perspective view illustrating a tire width direction cross-section of a reinforcing layer employed in a tire according to a third exemplary embodiment.
Fig. 8 is a perspective view of a cross-section of a modified example of a reinforcing layer employed in a tire according to the third exemplary embodiment, taken along the tire width direction.
Fig. 9 is a plan view to explain a manufacturing method of a tire according to the third exemplary embodiment, and illustrates a tire frame member as viewed from the tire radial direction outer side.
Fig. 10 is a plan view to explain an alternative manufacturing method of a tire according to the third exemplary embodiment of the present invention, and illustrates a tire frame member as viewed from the tire radial direction outer side.
Fig. 11 is a tire width direction cross-section to explain an alternative manufacturing method of a tire according to the first exemplary embodiment.
Fig. 12 is a cross-section of a tire according to a fourth exemplary embodiment taken along the tire width direction, said tire being a tire according to the present invention.

### DESCRIPTION OF EMBODIMENTS

Explanation follows regarding tires according to exemplary embodiments with reference to the drawings.

Note that in the drawings, the arrow TW indicates a tire width direction, the arrow TR indicates a tire radial direction (a direction orthogonal to a tire axis of rotation (not illustrated in the drawings)), and the arrow TC indicates a tire circumferential direction. In the following explanation, the side closer toward the axis of rotation of the tire in the tire radial direction is referred to as the "tire radial direction inner side", and the side further from the axis of rotation of the tire in the tire radial direction is referred to as the "tire radial direction outer side". The side closer to a tire equatorial plane CL in the tire width direction is referred to as the "tire width direction inner side", and the opposite side thereto, namely the side further from the tire equatorial plane CL in the tire width direction, is referred to as the "tire width direction outer side".

Moreover, the methods for measuring dimensions of the respective parts of the tire are based on the methods set out in the Japan Automobile Tyre Manufacturers Association (JATMA) YEAR BOOK, 2015 edition.

### First Exemplary Embodiment

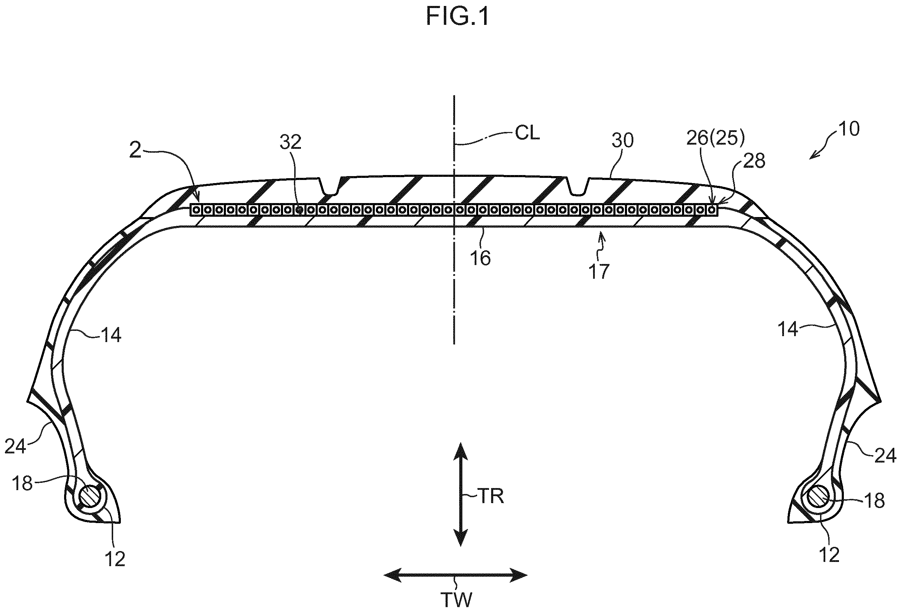

As illustrated in Fig. 1, a tire 10 of a first exemplary embodiment is a pneumatic tire employed when internally filled with air, and has a cross-section profile substantially the same as that of a traditional, general rubber pneumatic tire.

The tire 10 of the present exemplary embodiment includes a tire frame member 17 configuring a frame section of the tire 10. The tire frame member 17 is formed in a circular shape using a resin material. The tire frame member 17 is configured including a pair of bead portions 12 disposed spaced apart from each other in the tire width direction, side portions 14 continuing from tire radial direction outer sides of the bead portions 12, and a crown portion 16 continuing from the tire width direction inner sides of the side portions 14 and connecting together tire radial direction outer side ends of the respective side portions 14.

Note that the circumferential direction, width direction, and radial direction of the tire frame member 17 respectively correspond to the tire circumferential direction, the tire width direction, and the tire radial direction.

The tire frame member 17 is formed using a resin material as its main raw material. "Resin materials" do not encompass vulcanized rubber. Examples of the resin material include thermoplastic resins (including thermoplastic elastomers), thermosetting resins, and other generic resins, as well as engineering plastics (including super-engineering plastics).

Thermoplastic resins (including thermoplastic elastomers) refer to polymer compounds that undergo material softening and flow as temperature increases, while adopting a comparatively hard and strong state when cooled. The present specification distinguishes between thermoplastic elastomers, these being polymer compounds that undergo material softening and flow as temperature increases, while adopting a comparatively hard and strong state when cooled, and that exhibit rubber-like elasticity; and non-elastomer thermoplastic resins, these being polymer compounds that undergo material softening and flow as temperature increases, while adopting a comparatively hard and strong state when cooled, and that do not exhibit rubber-like elasticity.

Examples of thermoplastic resins (including thermoplastic elastomers) include polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), and thermoplastic vulcanizates (TPV), as well as polyolefin-based thermoplastic resins, polystyrene-based thermoplastic resins, polyamide-based thermoplastic resins, and polyester-based thermoplastic resins.

Thermoplastic materials having a deflection temperature under load (at a load of 0.45 MPa) as defined under ISO75-2 or ASTM D648 of 78°C or greater, a tensile yield strength as defined under JIS K7161 of 10 MPa or greater, a tensile elongation at break, similarly defined under JIS K7161, of 50% or greater, and a Vicat softening temperature (method A) as defined under JIS K7206 of 130°C or greater, may, for example, be employed for the thermoplastic materials listed above.

Thermosetting resins refer to polymer compounds that form a three dimensional network structure and harden as temperature increases. Examples of thermosetting resins include phenolic resins, epoxy resins, melamine resins, and urea resins.

Note that other than the thermoplastic resins (including thermoplastic elastomers) and the thermosetting resins already described, generic resin materials including (meta-)acrylic-based resins, EVA resins, vinyl chloride resins, fluororesins, silicone based resins, or the like may be employed as the resin material.

Note that the tire frame member 17 may be formed from a single resin material, or respective locations of the tire frame member 17 (such as the bead portions 12, the side portions 14, and the crown portion 16) may be formed from resin materials having different characteristics to each other. Moreover, in the present exemplary embodiment, the tire frame member 17 is formed from a thermoplastic resin.

As illustrated in Fig. 1, the bead portions 12 are locations that fit together with a standard rim (not illustrated in the drawings) through covering rubber 24, and an annular bead core 18 extending along the tire circumferential direction is embedded inside each bead portion 12. The bead core 18 is configured by a bead cord (not illustrated in the drawings) that is a metal cord (for example a steel cord), an organic fiber cord, a resin-covered organic fiber cord, or a hard resin. Note that the bead cores 18 may be omitted as long as sufficient rigidity of the bead portions 12 can be secured.

The side portions 14 are locations configuring side portions of the tire 10, and curve around gently from the respective bead portions 12 toward the crown portion 16 so as to protrude toward the tire width direction outer side.

The crown portion 16 is a location that supports a tread 30, described later, that is laid at the tire radial direction outer side of the crown portion 16. A housing recess 32, described later, is formed in an outer circumferential face of the crown portion 16.

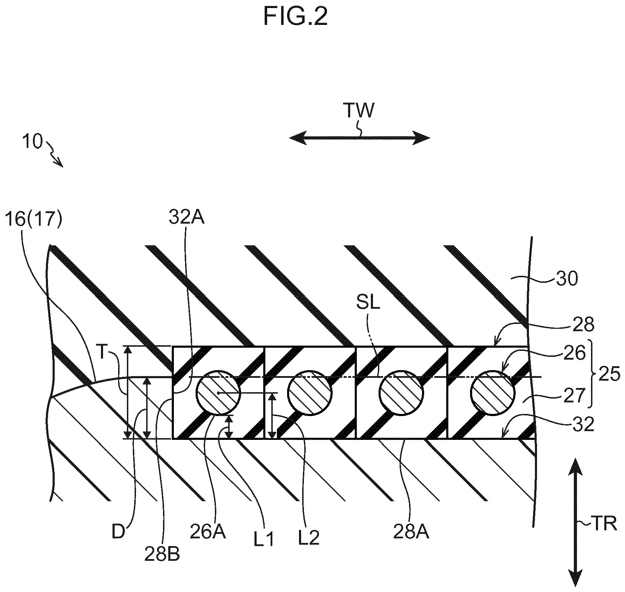

A reinforcing layer 28 is laid at the tire radial direction outer side of the crown portion 16. The reinforcing layer 28 is formed by winding a rubber-covered reinforcing cord 26 (covered by rubber 27) in the tire circumferential direction to form a spiral pattern. In other words, the reinforcing layer 28 is formed by winding a reinforcing cord member 25, formed by covering the reinforcing cord 26 with the rubber 27, in the tire circumferential direction to form a spiral pattern. Note that the rubber covering the reinforcing cord 26 is indicated by the reference numeral 27 in Fig. 2. Moreover, the rubber 27 covering the reinforcing cord 26 has a substantially rectangular external profile. Note that the reinforcing layer 28 of the present exemplary embodiment is an example of a reinforcing layer of the present invention.

The tread 30 is laid at the tire radial direction outer side of the reinforcing layer 28. The tread 30 covers the reinforcing layer 28. The tread 30 is formed with a tread pattern (not illustrated in the drawings) on a ground contact face that contacts a road surface.

Covering rubber 24 is laid on the tire frame member 17 so as to span from an outer face of each side portion 14 to an inner face of the corresponding bead portion 12. A rubber material having superior weather resistance to the tire frame member 17 and superior sealing properties with respect to a standard rim than the tire frame member 17 is employed as the rubber material configuring the covering rubber 24. Note that in the present exemplary embodiment, the outer face of the tire frame member 17 is fully covered by the tread 30 and the covering rubber 24.

Next, detailed explanation follows regarding the housing recess 32.

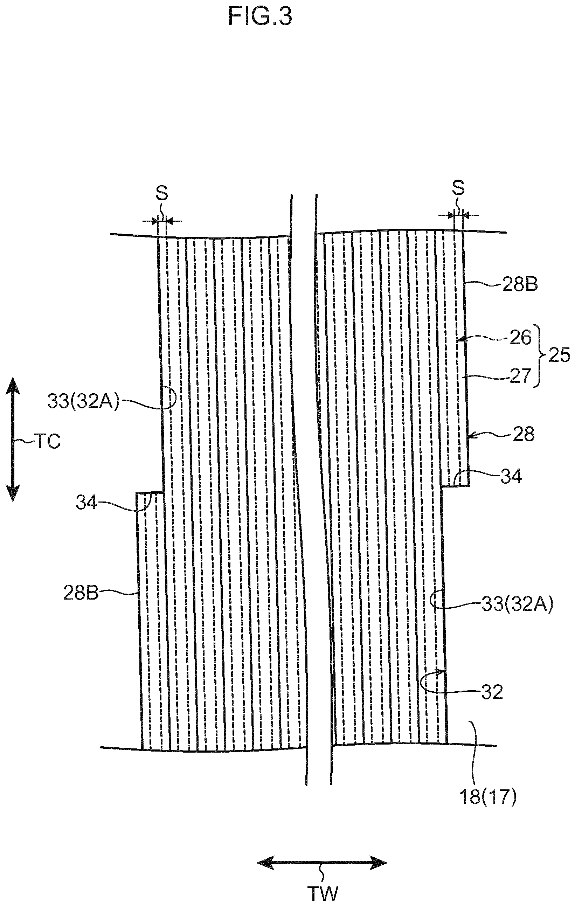

As illustrated in Fig. 1 and Fig. 3, the housing recess 32 is a depression recessed toward the tire radial direction inner side in the outer circumferential face of the crown portion 16, and is formed continuously around the tire circumferential direction. A bottom face of the housing recess 32 is configured with a substantially flat profile along the tire width direction. At least an inner circumferential portion 28A of the reinforcing layer 28 is housed in the housing recess 32, and respective side faces 28B of the reinforcing layer 28 contact recess wall faces 32A on both tire width direction sides of the housing recess 32. Note that the side faces 28B of the reinforcing layer 28 of the present exemplary embodiment are formed by the rubber 27 covering the reinforcing cord 26.

As illustrated in Fig. 2, a depth D of the housing recess 32 is set to a depth no greater than a thickness T of the reinforcing layer 28, and exceeding a tire radial direction length L1 from an inner circumferential face of the reinforcing layer 28 to a tire radial direction inner side end portion 26A of the reinforcing cord 26. Note that the depth of the housing recess 32 refers to the tire radial direction length from an opening edge of the housing recess 32 to the bottom face of the housing recess 32, and in the present exemplary embodiment, refers to the tire radial direction length from an imaginary straight line SL (illustrated by a double-dotted dashed line in Fig. 2), extending along the tire width direction from the opening edge on one tire width direction side of the housing recess 32 to the opening edge on the other tire width direction side of the housing recess 32, to the bottom face of the housing recess 32.

Moreover, in the present exemplary embodiment, the depth D of the housing recess 32 is set so as to be a depth exceeding a tire radial direction length L2 from the inner circumferential face of the reinforcing layer 28 to the center of the reinforcing cord 26.

As illustrated in Fig. 3, as viewed from the tire radial direction outer side of the crown portion 16, recess wall faces 32A of the housing recess 32 are inclined in the same direction as the reinforcing cord 26 with respect to the tire circumferential direction. Specifically, the recess wall faces 32A are each configured including an inclined portion 33 that is inclined in the same direction as the reinforcing cord 26 with respect to the tire circumferential direction and that is contacted by the side face 28B of the reinforcing layer 28, and a step portion 34 formed with a stepped profile in the tire width direction with respect to the inclined portion 33. Each step portion 34 is connected to an end portion (a winding-start end or a winding-end end) of the reinforcing cord 26 of the reinforcing layer 28, either directly or through the rubber 27.

Moreover, as illustrated in Fig. 2, the respective recess wall faces 32A on both tire width direction sides of the housing recess 32 extend in the tire radial direction. Note that the present invention is not limited to such a configuration, and configuration may be made in which the recess wall faces 32A are gradually inclined toward the tire width direction outer sides, or configuration may be made in which the recess wall faces 32A are inclined in steps toward the tire width direction outer side, on progression from the tire radial direction inner side toward the tire radial direction outer side.

Note that in the present exemplary embodiment, the resin material configuring the tire 10 and the rubber are bonded together using an adhesive. Specifically, the tire frame member 17 and the rubber 27 configuring the reinforcing layer 28 are bonded together using an adhesive, and the tire frame member 17 and the tread 30 are adhered together using an adhesive. Moreover, the tire frame member 17 and the covering rubber 24 are similarly adhered together using an adhesive.

Next, explanation follows regarding an example of a manufacturing method of the tire 10 of the present exemplary embodiment.

First, explanation follows regarding a frame forming process.

In the frame forming process, a pair of tire frame half parts (not illustrated in the drawings) corresponding to halves of the tire frame member 17 divided about the crown portion 16 are formed by injection molding a resin material. During injection molding, half the housing recess 32 is formed in the divided crown portion 16 of each tire frame half part. Note that the tire frame half parts are injection molded in a state in which a pre-formed bead core 18 has been disposed at a predetermined position inside the mold. The bead core 18 is thus embedded in the bead portion 12 of the molded tire frame half part.

Next, the pair of tire frame half parts are bonded together by thermal welding so as to form the tire frame member 17.

Then, unvulcanized covering rubber that will become the covering rubber 24 is affixed to the tire frame member 17 from the outer faces of the side portions 14 to the inner faces of the bead portions 12. The tire frame member 17 provided with unvulcanized covering rubber is thus formed.

Note that in the present exemplary embodiment, a pair of the tire frame half parts are formed, and the pair of tire frame half parts are bonded together in order to form the tire frame member 17. However, the present invention is not limited to such a configuration. For example, the tire frame member 17 may be formed from three or more divided parts (such as the bead portions 12, the side portions 14, and the crown portion 16), and the divided parts may be bonded together to form the tire frame member 17. Alternatively, the tire frame member 17 may be formed undivided.

Next, explanation follows regarding a reinforcing layer forming process.

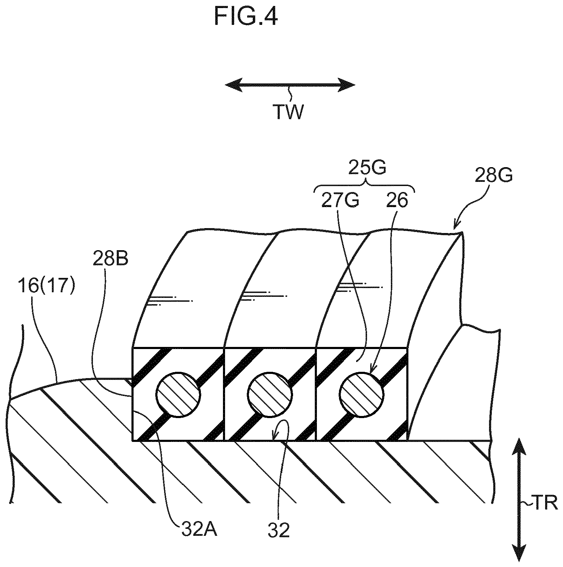

In the reinforcing layer forming process, as illustrated in Fig. 4, the reinforcing cord 26, covered with unvulcanized rubber 27G that will become the rubber 27, is wound onto the bottom face of the housing recess 32 formed in the crown portion 16 so as to form a spiral pattern, thereby forming an unvulcanized reinforcing layer 28G. In other words, the reinforcing layer 28G is formed by winding an unvulcanized reinforcing cord member 25G, formed by covering the reinforcing cord 26 with the rubber 27G, in the tire circumferential direction onto the bottom face of the housing recess 32 formed in the crown portion 16 so as to form a spiral pattern. Note that the unvulcanized reinforcing cord member 25G will become the reinforcing cord member 25 after undergoing vulcanization.

Specifically, first, a winding-start end portion at one end portion of the reinforcing cord member 25G is abutted against the step portion 34 (see Fig. 3) of the recess wall face 32A of one of the housing recess 32, and in this state, the reinforcing cord member 25G is wound around one turn while abutting a side face of the reinforcing cord member 25G against the inclined portion 33. Following this, the reinforcing cord member 25G is wound in a spiral pattern onto the bottom face of the housing recess 32 while abutting the next portion to be wound against a portion wound in the previous turn. Then, a winding-end end portion at the other end portion of the reinforcing cord member 25G is abutted against the step portion 34 after winding the reinforcing cord member 25G around one turn while abutting a side face of the reinforcing cord member 25G against the inclined portion 33 of the recess wall face 32A positioned on a winding-end side of the reinforcing cord member 25G. The unvulcanized reinforcing layer 28G is thus formed in this manner.

In the reinforcing layer forming process described above, configuration is made such that winding is started while abutting the side face of the unvulcanized reinforcing cord member 25G against one recess wall face 32A of the housing recess 32, and winding is ended while abutting the side face of the reinforcing cord member 25G against the other recess wall face 32A. This thereby improves positioning precision of the unvulcanized reinforcing layer 28G after the reinforcing layer forming process.

Moreover, since at least the inner circumferential portion of the reinforcing layer 28G is housed in the housing recess 32, and during a vulcanization process, described later, the recess wall faces 32A act as dam, thereby suppressing the unvulcanized rubber 27G from flowing out to the tire width direction outer side of the recess wall faces 32A. In particular, in the present exemplary embodiment, the recess wall faces 32A extend in the tire radial direction, thereby enabling the rubber 27G to be effectively suppressed from flowing out to the tire width direction outer side of the recess wall faces 32A. This thereby enables the reinforcing cord 26 in the reinforcing layer 28 to be disposed at a more uniform spacing after vulcanization.

Next, explanation follows regarding a tread placement process. In the tread placement process, unvulcanized tread rubber (not illustrated in the drawings) that will become the tread 30 is disposed at the tire radial direction outer side of the unvulcanized reinforcing layer 28G. Specifically, unvulcanized tread rubber in a belt shape corresponding to one full turn of the tire is wound onto the outer circumference of the tire frame member 17.

Next, explanation follows regarding the vulcanization process. In the vulcanization process, the unvulcanized rubber 27G adhered to the tire frame member 17, the unvulcanized tread rubber, and the unvulcanized covering rubber are vulcanized. Specifically, the tire frame member 17 is set in a vulcanizer, and the unvulcanized rubber 27G, the unvulcanized tread rubber, and the unvulcanized covering rubber are vulcanized by heating to a predetermined temperature for a predetermined length of time. The unvulcanized rubber 27G, the unvulcanized covering rubber, and the unvulcanized tread rubber are thus vulcanized until they reach the level of vulcanization of the final product.

Next, the vulcanized tire 10 is removed from the vulcanizer. The tire 10 is thus completed.

Note that the sequence of the respective processes in the tire manufacturing method of the tire according to the present exemplary embodiment may be modified as appropriate. For example, before affixing the unvulcanized covering rubber to the tire frame member 17, the reinforcing layer 28 may be disposed on the crown portion 16 and the unvulcanized tread rubber may be disposed over the reinforcing layer 28. Moreover, configuration may be made in which unvulcanized covering rubber is affixed to tire half parts before bonding together the pair of tire half parts.

Next, explanation follows regarding operation and advantageous effects of the tire 10 of the present exemplary embodiment.

In the tire 10, at least the inner circumferential portion 28A of the reinforcing layer 28 is housed in the housing recess 32 of the crown portion 16, and the side faces 28B of the reinforcing layer 28 contact the respective recess wall faces 32A on both tire width direction sides of the housing recess 32. In other words, the reinforcing layer 28 is restrained from both tire width direction sides by the two recess wall faces 32A on both tire width direction sides. Accordingly, in the tire 10, tire width direction movement of the reinforcing layer 28 with respect to the tire frame member 17 as a result of elastic deformation of the rubber 27 configuring the reinforcing layer 28 in response to tire width direction input arising during cornering and the like can be suppressed compared to configurations in which, for example, the reinforcing layer 28 is provided on a flat crown portion 16. The tire 10 is thus capable of suppressing an excessive separation force between the reinforcing layer 28, which includes the rubber 27, and the tire frame member 17 formed from the resin material from arising in response to tire width direction input.

Moreover, since the depth D of the housing recess 32 is set to a depth no greater than the thickness T of the reinforcing layer 28, the tire 10 is capable of suppressing a reduction in rigidity resulting from thinner locations corresponding to the housing recess 32 of the crown portion 16 in comparison to configurations in which, for example, the depth D of the housing recess 32 recess exceeds the thickness T of the reinforcing layer 28. On the other hand, setting the depth D of the housing recess 32 to a depth exceeding the tire radial direction length L1 from the inner circumferential face of the reinforcing layer 28 to the tire radial direction inner side end portion 26A of the reinforcing cord 26 enables movement of the reinforcing cord 26 due to elastic deformation of the rubber 27 configuring the reinforcing layer 28 in response to tire width direction input to be suppressed. Accordingly, an excessive separation force can be effectively suppressed from arising between the tire frame member 17 and the reinforcing layer 28 in response to tire width direction input. In particular, in the present exemplary embodiment, setting the depth D of the housing recess 32 to a depth exceeding the tire radial direction length L2 from the inner circumferential face of the reinforcing layer 28 to the center of the reinforcing cord 26 enables movement of the reinforcing cord 26 in response to tire width direction input to be even more effectively suppressed.

In the tire 10, the reinforcing layer 28 is formed by winding the rubber-covered reinforcing cord 26 (in other words, the reinforcing cord member 25) in the tire circumferential direction to form a spiral pattern onto the bottom face of the housing recess 32. This improves the tire circumferential direction rigidity of the crown portion 16. Moreover, radial stretch of the crown portion 16 (a phenomenon in which the crown portion 16 bulges out in the tire radial direction) as the tire revolves is suppressed by the hoop effect of the reinforcing layer 28 formed by the rubber-covered reinforcing cord 26.

Moreover, in the tire 10, the inclined portions 33 of the recess wall faces 32A are inclined in the same direction as the reinforcing cord 26 with respect to the tire circumferential direction, such that a spacing (in other words, the thickness of the rubber 27) S between the inclined portions 33 and the reinforcing cord 26 is substantially uniform. Accordingly, in the tire 10, the advantageous effect of suppressing movement of the reinforcing cord 26 in response to tire width direction input is greater than that of a configuration in which, for example, the recess wall faces 32A are inclined in a different direction than the reinforcing cord 26 with respect to the tire circumferential direction. This thereby enables an excessive separation force to be even more effectively suppressed from arising between the tire frame member 17 and the reinforcing layer 28 in response to tire width direction input.

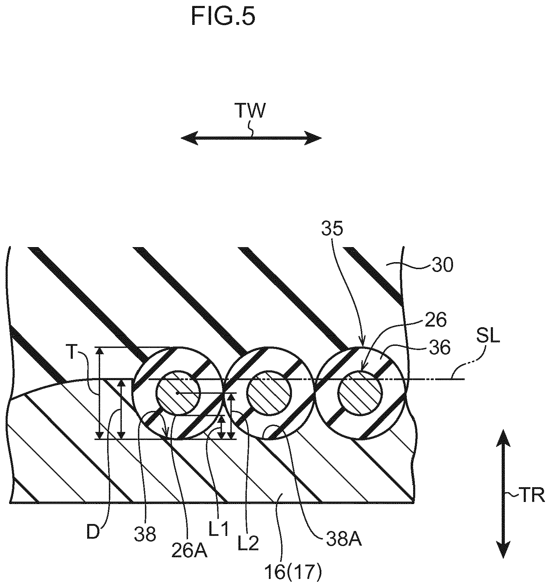

In the tire 10 of the first exemplary embodiment, the rubber 27 covering the reinforcing cord 26 has a substantially rectangular shaped external profile. However, the present invention is not limited to this configuration. For example, as in a reinforcing layer 35 of a modified example illustrated in Fig. 5, the rubber covering the reinforcing cord 26 may have a substantially circular external profile, and configuration may be made in which the shape of a bottom face 38A of a housing recess 38 corresponds to the external profile of rubber 36, more specifically, a groove having a semicircular cross-section profile, into which a tire radial direction inner side portion of the rubber covering the reinforcing cord 26 fits, may be formed in a spiral pattern in the tire circumferential direction. In this configuration, positioning precision of the reinforcing cord 26 covered by rubber in an unvulcanized state is improved in the reinforcing layer forming process.

### Second Exemplary Embodiment

Next, explanation follows regarding a tire according to a second exemplary embodiment. Note that configurations that are the same as those of the first exemplary embodiment are allocated the same reference numerals, and explanation thereof is omitted where appropriate.

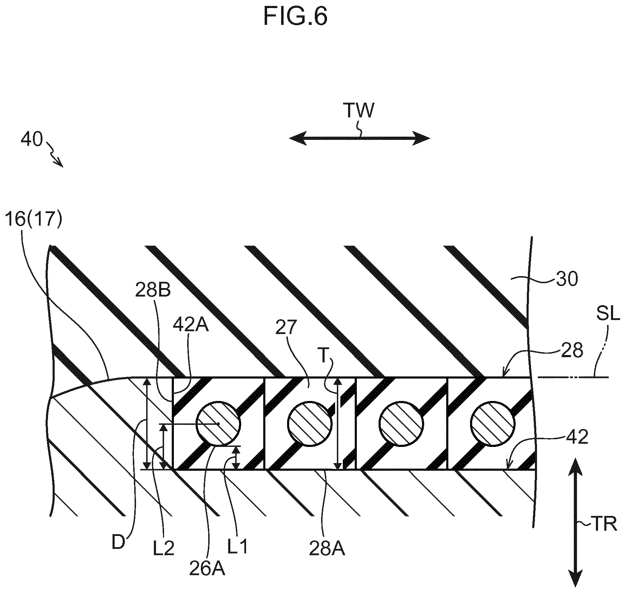

As illustrated in Fig. 6, a tire 40 of the present exemplary embodiment has the same configuration as the tire 10 of the first exemplary embodiment, with the exception of the point that the depth D of a housing recess 42 is set to a depth having the same value as the thickness T of the reinforcing layer 28.

Explanation follows regarding operation and advantageous effects of the tire 40 of the present exemplary embodiment. Note that explanation regarding operation and advantageous effects obtained by configurations the same as those of the tire 10 of the first exemplary embodiment will be omitted.

In the tire 40, the depth D of the housing recess 42 is set to a depth having the same value as the thickness T of the reinforcing layer 28, such that an outer circumferential face of the tire frame member 17 and an outer circumferential face of the reinforcing layer 28 lie in the same plane as each other. Accordingly, tire width direction movement of the reinforcing layer 28 in response to tire width direction input arising during cornering and the like can be effectively suppressed. Moreover, in the vulcanization process, the unvulcanized rubber 27G can be even better suppressed from flowing out to the tire width direction outer side of recess wall faces 42A.

### Third Exemplary Embodiment

Next, explanation follows regarding a tire according to a third exemplary embodiment. Note that configurations the same as those of the first exemplary embodiment are allocated the same reference numerals, and explanation thereof is omitted where appropriate.

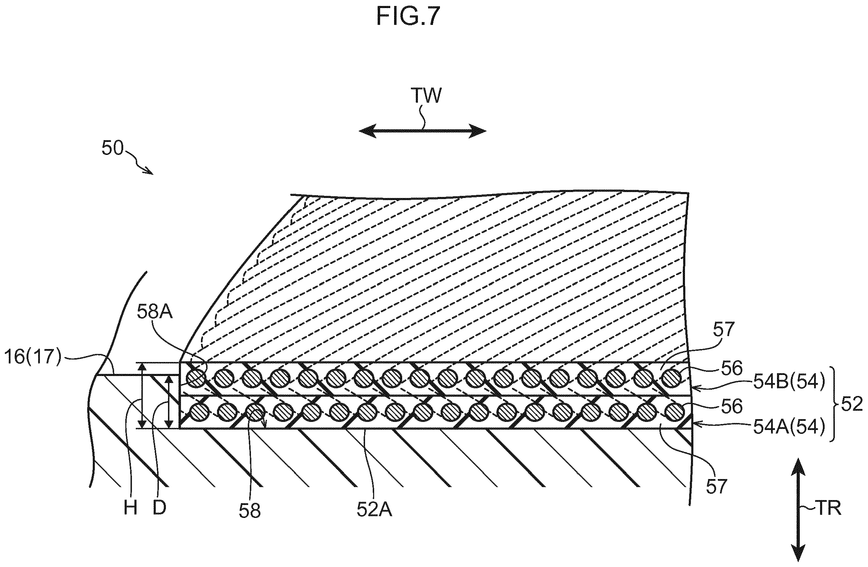

As illustrated in Fig. 7, a tire 50 of the present exemplary embodiment has the same configuration as the tire 10 of the first exemplary embodiment, with the exception of the configurations of a reinforcing layer 52 and a housing recess 58. Note that the reinforcing layer 52 of the present exemplary embodiment is an example of a reinforcing layer of the present invention.

The reinforcing layer 52 is configured by overlaying plural reinforcing plies 54 (two in the present exemplary embodiment). The reinforcing plies 54 are each formed by arranging plural reinforcing cords 56 so as to extend at an angle with respect to the tire width direction, and so as to be spaced apart from each other in the tire circumferential direction, and covering the plural reinforcing cords 56 with rubber. The respective reinforcing cords 56 in each of the mutually overlaid reinforcing plies 54 are inclined in opposite directions to each other with respect to the tire circumferential direction.

Note that in Fig. 7, the rubber that covers the reinforcing cords 56 is indicated by the reference numeral 57, and the two reinforcing plies 54 are indicated by the reference numerals 54A and 54B in sequence from the tire radial direction inner side. Moreover, the rubber 57 covering the reinforcing cords 56 has a substantially rectangular shaped external profile with its length direction running in the tire width direction.

Moreover, in the present exemplary embodiment, the mutually overlaid reinforcing plies 54A, 54B have substantially the same width (tire width direction width) as each other. Moreover, the reinforcing layer 52 has a substantially uniform width around the tire circumferential direction.

The housing recess 58 has the same configuration as the housing recess 32 of the first exemplary embodiment with the exception of the points that recess wall faces 58A extend along the tire circumferential direction and that a width (tire width direction length) between the recess wall faces 58A is substantially uniform. An inner circumferential portion 52A of the reinforcing layer 52 is housed in the housing recess 58. Specifically, at least tire radial direction inner side portions of the reinforcing cords 56 of the reinforcing ply 54B are housed in the housing recess 58.

Next, explanation follows regarding a manufacturing method of the tire 50 of the present exemplary embodiment.

Note that the manufacturing method of the tire 50 of the present exemplary embodiment may employ the processes of the manufacturing method of the tire 10 of the first exemplary embodiment, with the exception of the reinforcing layer forming process, and so the following explanation pertains to a reinforcing layer forming process of the tire 50.

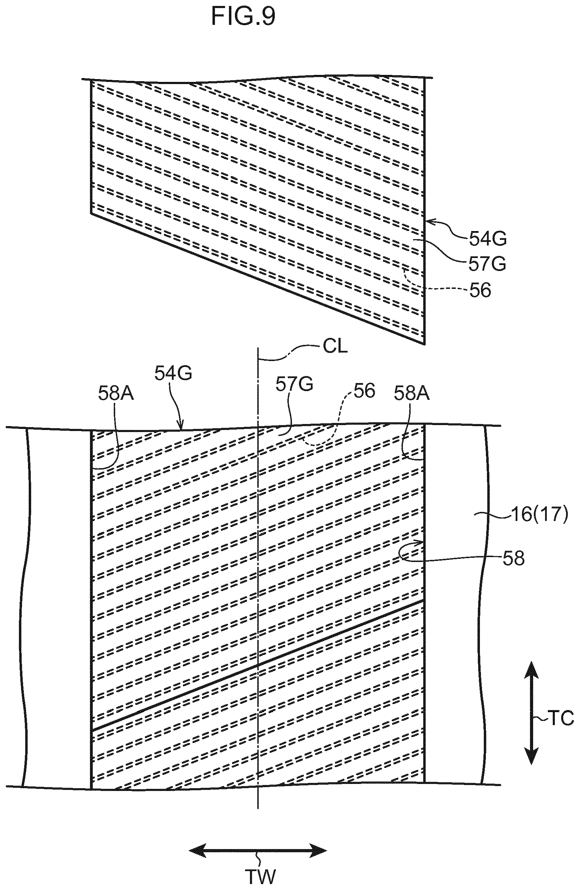

In the reinforcing layer forming process of the present exemplary embodiment, an unvulcanized reinforcing layer 52G that will become the reinforcing layer 52 is formed on the crown portion 16 of the tire frame member 17. First, as illustrated in Fig. 9, plural of the reinforcing cords 56 are arranged spaced apart from each other in one direction, and are covered with rubber 57G in an unvulcanized state so as to form two unvulcanized reinforcing plies 54G in belt shapes with ends. Note that the one direction of the reinforcing ply 54G referred to here is synonymous with the length direction of the reinforcing ply 54G. The reinforcing cords 56 are embedded within the rubber 57G so as to extend at an angle with respect to the width direction of the reinforcing ply 54G. Moreover, the width of the reinforcing ply 54G is formed to a width corresponding to the width of the housing recess 58.

Next, the first reinforcing ply 54G is wound onto the bottom face of the housing recess 58 formed in the crown portion 16, and the two length direction end portions of the first reinforcing ply 54G are abutted against each other. Next, the second reinforcing ply 54G is wound onto the outer circumference of the first reinforcing ply 54G, and the two length direction end portions of the second reinforcing ply 54G are abutted against each other, thereby overlaying the first reinforcing ply 54G with the second reinforcing ply 54G. When this is performed, the second reinforcing ply 54G is overlaid such that the reinforcing cords 56 of the first reinforcing ply 54G and the reinforcing cords 56 of the second reinforcing ply 54G are inclined in opposite directions to each other with respect to the one direction described above. In this manner, the unvulcanized reinforcing layer 52G is formed on the crown portion 16.

Next, explanation follows regarding operation and advantageous effects of the tire 50 of the present exemplary embodiment. Note that explanation regarding operation and advantageous effects obtained by configurations the same as those of the tire 10 of the first exemplary embodiment will be omitted.

In the tire 50, the reinforcing layer 52 is formed by the plural reinforcing plies 54 (two in the present exemplary embodiment), and the respective reinforcing cords 56 in each of the mutually overlaid reinforcing plies 54 are inclined in opposite directions to each other with respect to the tire circumferential direction, thereby obtaining a pantograph effect. Accordingly, in the tire 50, during travel, tire circumferential direction shear force arising between the tread 30 and the crown portion 16 due to a difference between the diameters of the tread 30 and the crown portion 16 is absorbed by the reinforcing layer 52. This thereby enables tire circumferential direction separation force arising between the crown portion 16 and the reinforcing layer 52 and between the reinforcing layer 52 and the tread 30 to be reduced.

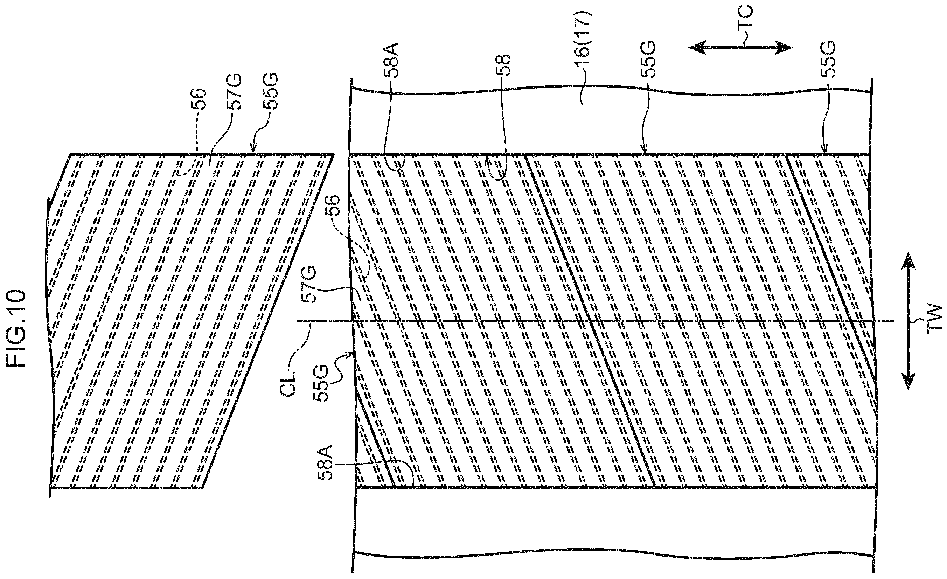

In the manufacturing method of the tire 50 of the third exemplary embodiment, as illustrated in Fig. 9, configuration is made in which the two reinforcing plies 54G are wound onto the crown portion 16. However, the present invention is not limited to such a configuration. For example, as illustrated in Fig. 10, configuration may be made in which the unvulcanized reinforcing ply 54G that has a belt shape with ends is divided into plural pieces in the tire circumferential direction to configure unvulcanized ply pieces 55G. The ply pieces 55G may then be affixed to the bottom face of the housing recess 58 to form the unvulcanized reinforcing layer 52G. Specifically, the ply pieces 55G are affixed to the bottom face of the housing recess 58 around one full turn to form the first reinforcing ply 54G, and then ply pieces 55G are affixed to the outer circumference of the first reinforcing ply 54G around one full turn to form the second reinforcing ply 54G. When this is performed, the ply pieces 55G are affixed such that joints between the ply pieces 55G forming the second reinforcing ply 54G do not align with joints between the ply pieces 55G forming the first reinforcing ply 54G (so as to be offset). The unvulcanized reinforcing layer 52G may be formed in this manner.

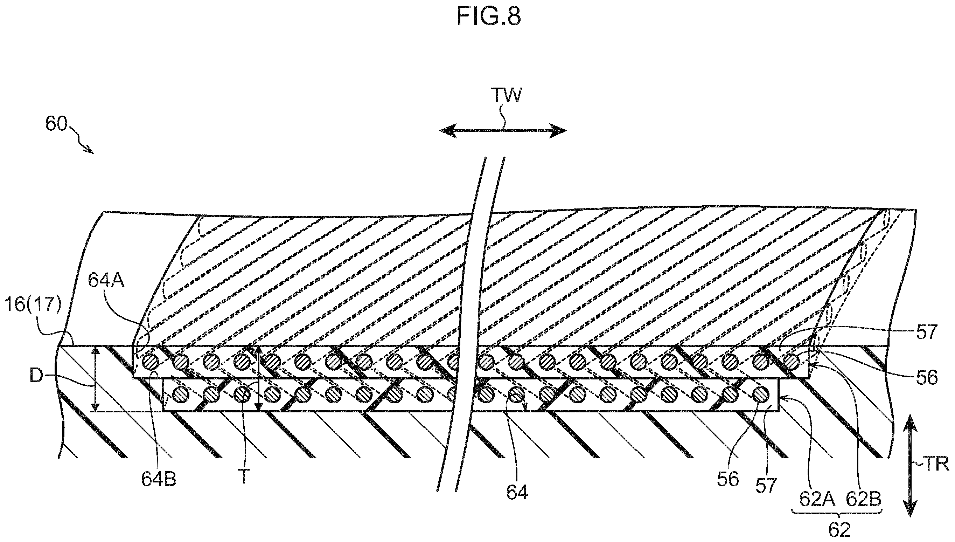

In the tire 50 of the third exemplary embodiment, the mutually overlaid reinforcing plies 54 have substantially the same width as each other. However, the present invention is not limited to such a configuration. For example, as in a reinforcing layer 62 of a tire 60 of a modified example illustrated in Fig. 8, configuration may be made in which a tire radial direction outer side reinforcing ply 62B has a wider width than a tire radial direction inner side reinforcing ply 62A, and recess wall faces 64A of a housing recess 64 are formed with steps 64B to accommodate the different widths of the reinforcing ply 62A and the reinforcing ply 62B.

### Fourth Exemplary Embodiment

Next, explanation follows regarding a tire according to a fourth exemplary embodiment being a tire according to the the present invention. Note that configurations the same as those of the first exemplary embodiment are allocated the same reference numerals, and explanation thereof is omitted where appropriate.

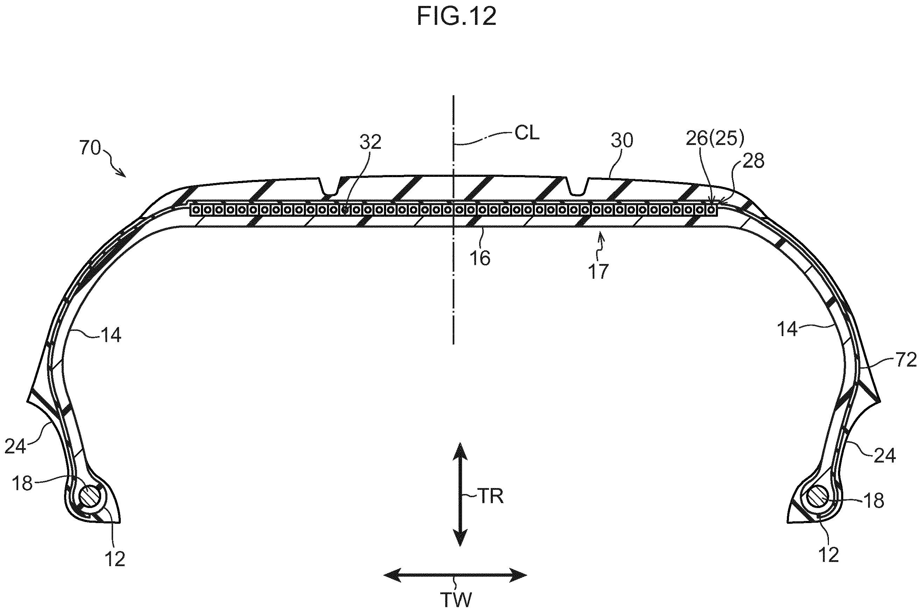

As illustrated in Fig. 12, a tire 70 of the present exemplary embodiment has the same configuration as the tire 10 of the first exemplary embodiment, with the exception of the provision of a cover layer 72. Note that the cover layer 72 of the present exemplary embodiment is an example of a cover layer of the present invention.

The cover layer 72 extends from the bead portion 12 to the side portion 14 and covers an outer face of the side portion 14. Specifically, the cover layer 72 extends from an outer face of one of the bead portions 12 of the tire frame member 17 to the outer face of one of the side portions 14, passes outer circumferential faces of the crown portion 16 and the reinforcing layer 28, and extends over the outer face of the other of the side portions 14 and the outer face of the other of the bead portions 12, thereby fully covering the outer circumference of the tire frame member 17. Note that in the present exemplary embodiment, the two end portions of the cover layer 72 respectively extend as far as tire radial direction inner side ends of the tire frame member 17; however, it is sufficient that the two ends of the cover layer 72 extend at least as far as a position overlapping with a fitted rim, not illustrated in the drawings, in the tire width direction.

Moreover, the cover layer 72 is disposed further inside the tire than the covering rubber 24 and the tread 30.

The cover layer 72 is formed by covering plural cover cords (not illustrated in the drawings) in rubber. The cover cords extend in a radial direction and are laid spaced apart from each other in the tire circumferential direction. Note that examples of the cover cords include monofilaments (single strands) of metal fibers or organic fibers, as well as multifilaments (twisted strands) of twisted together metal fibers or organic fibers. Materials such as steel may be employed as metal fibers, and materials such as nylon, PET, glass, or aramids may be employed as organic fibers.

Next, explanation follows regarding operation and advantageous effects of the tire 70 of the present exemplary embodiment. Note that explanation regarding operation and advantageous effects obtained by configurations the same as those of the tire 10 of the first exemplary embodiment will be omitted.

In the tire 70, the outer faces of the side portions 14 are covered by the cover layer 72 formed by plural cover cords covered in rubber. Accordingly, for example, the cut resistance performance of at least the side portions 14 is improved in comparison to configurations in which the outer faces of the side portions 14 are not covered by the cover layer 72.

In the fourth exemplary embodiment, the cover layer 72 is configured provided to the tire 70. This configuration in which the cover layer 72 is provided may also be applied to the second exemplary embodiment, the third exemplary embodiment, and the modified examples corresponding to these exemplary embodiments.

In the tire 10 of the first exemplary embodiment, the reinforcing layer 28 and the tread 30 are adhered together using an adhesive. However, the present invention is not limited to such a configuration. Cushioning rubber may be affixed to an inner circumferential face of the tread 30, and the tread 30 may be adhered to the outer circumferential faces of the reinforcing layer 28 and the tire frame member 17 through the cushioning rubber. Note that a configuration including the cushioning rubber may also be applied to the second to the fourth exemplary embodiments and to the modified examples of these exemplary embodiments.

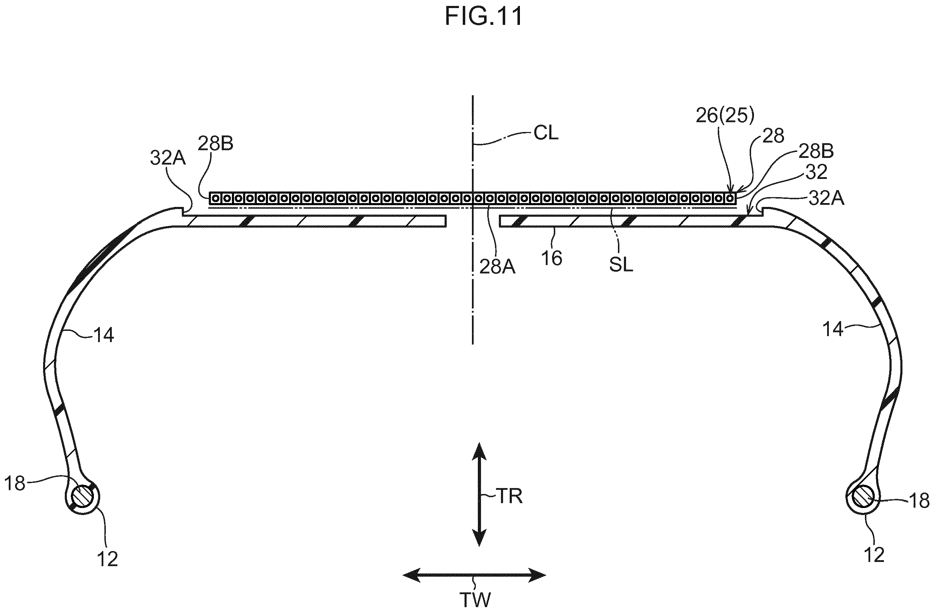

In the first exemplary embodiment, the reinforcing cord 26 covered by the unvulcanized rubber 27G is formed by winding the reinforcing layer 28 onto the bottom face of the housing recess 32, and then performing vulcanization to manufacture the tire 10. However, the present invention is not limited to such a configuration. For example, the tire 10 may be manufactured by an alternative manufacturing method for the tire 10, illustrated in Fig. 11. In this alternative manufacturing method for the tire 10, a reinforcing cord 26 covered by unvulcanized rubber 27G (an unvulcanized reinforcing cord member 25G) is pre-coiled to form an annular reinforcing layer 28 which is then vulcanized to manufacture a vulcanized reinforcing layer 28. The crown portion 16, divided into tire frame half parts, is then inserted at the circumferential inner side of the reinforcing layer 28 so as to approach the reinforcing layer 28 from both sides. This insertion is performed until the side faces 28B of the reinforcing layer 28 abut the recess wall faces 32A of the housing recess 32, after which the end portions of the divided crown portion 16 are bonded together using a thermoplastic resin, for example. Note that the reinforcing layer 28 and the crown portion 16 are bonded together by a pre-coated adhesive. An adhesive is then coated onto the outer circumferences of the tire frame member 17 and the reinforcing layer 28 and the covering rubber 24 and the tread 30 are laid, thus manufacturing the tire 10.

In the second exemplary embodiment, the reinforcing layer 28 is housed in the housing recess 32, and the tread 30 is adhered to the reinforcing layer 28 and the surrounding crown portion 16 using an adhesive. However, the present invention is not limited to such a configuration. For example, configuration may be made in which an intersecting belt layer having the same configuration as the reinforcing layer 52 of the third exemplary embodiment is disposed on the outer circumferential face of the reinforcing layer 28.

In the third exemplary embodiment, the reinforcing layer 62 of a modified example is housed in the housing recess 64, and the tread 30 is adhered to the reinforcing layer 28 and the surrounding crown portion 16 using an adhesive. However, the present invention is not limited to such a configuration. For example, configuration may be made in which a spiral belt layer having the same configuration as the reinforcing layer 28 of the first exemplary embodiment is disposed on an outer circumferential face of the reinforcing layer 62.

Explanation has been given regarding exemplary embodiments as examples of implementation of the present invention. However, these exemplary embodiments are merely examples, and various modifications may be implemented within a range not departing from the scope of the claims of the present invention, and the sequence of manufacturing processes may be modified as appropriate. Moreover, the present invention is obviously not limited to these exemplary embodiments, and is defined by the claims.

## Claims

1. A tire (10, 40, 50, 60, 70), comprising:
a circular tire frame member (17) that is formed from a resin material and that includes a bead portion (12), a side portion (14) continuous with a tire radial direction outer side of the bead portion (12), and a crown portion (16) continuous with a tire width direction inner side of the side portion (14);
a reinforcing layer (28, 52, 62) that is provided at a tire radial direction outer side of the crown portion (16), and that is formed by covering, with rubber (25, 27, 57), a reinforcing cord (26, 56) extending in a direction intersecting the tire width direction; and
a housing recess (32, 42, 58, 64) that is formed in the crown portion (16), and that extends in a tire circumferential direction, with at least an inner circumferential portion (28A, 52A) of the reinforcing layer (28, 52, 62) being housed in the housing recess (32, 42, 58, 64) and with side faces (28B) of the reinforcing layer (28, 52, 62) contacting recess wall faces (32A, 58A, 64A) on both tire width direction sides of the housing recess (32, 42, 58, 64), **characterized in that**
the tire (10, 40, 50, 60, 70) further comprises a cover layer (72) that is formed by covering a plurality of cover cords with rubber (25, 27, 57), that extends from the bead portion (12) to the side portion (14), and that covers an outer face of the side portion (14).

2. The tire (10, 40, 50, 60, 70) of claim 1, wherein a depth (D) of the housing recess (32, 42, 58, 64) is no greater than a thickness (T) of the reinforcing layer (28, 52, 62).

3. The tire (10, 40, 50, 60, 70) of claim 2, wherein the depth (D) of the housing recess (32, 42, 58, 64) exceeds a length along the tire radial direction from an inner circumferential face of the reinforcing layer (28, 52, 62) to a tire radial direction inner side end portion (26A) of the reinforcing cord (26, 56).

4. The tire (10, 40, 50, 60, 70) of any one of claim 1 to claim 3, wherein the reinforcing layer (28, 52, 62) is formed by winding the rubber-covered reinforcing cord (26, 56) in a tire circumferential direction to form a spiral pattern.

5. The tire (10, 40, 50, 60, 70) of claim 4, wherein, as viewed from the tire radial direction outer side of the crown portion (16), the recess wall faces (32A, 58A, 64A) are inclined in the same direction as the reinforcing cord (26, 56) with respect to the tire circumferential direction.

## Patentansprüche

1. Reifen (10, 40, 50, 60, 70), umfassend:
ein kreisförmiges Reifenrahmenelement (17), das aus einem Harzmaterial geformt ist und das einen Wulstabschnitt (12), einen Seitenabschnitt (14), der mit einer Reifenradialrichtungsaußenseite des Wulstabschnitts (12) durchgehend ist, und einen Scheitelabschnitt (16) einschließt, der mit einer Reifenbreitenrichtungsinnenseite des Seitenabschnitts (14) durchgehend ist;
eine Verstärkungslage (28, 52, 62), die an einer Reifenradialrichtungsaußenseite des Scheitelabschnitts (16) vorgesehen ist und durch Beschichten eines Verstärkungskords (26, 56), der sich in eine Richtung erstreckt, die die Reifenbreitenrichtung schneidet, mit Kautschuk (25, 27, 57) geformt wird; und
eine Aufnahmevertiefung (32, 42, 58, 64), die in dem Scheitelabschnitt (16) ausgebildet ist und sich in einer Reifenumfangsrichtung erstreckt, wobei mindestens ein Innenumfangsabschnitt (28A, 52A) der Verstärkungslage (28, 52, 62) in der Aufnahmevertiefung (32, 42, 58, 64) aufgenommen wird und Seitenflächen (28B) der Verstärkungslage (28, 52, 62) Wandflächen der Vertiefung (32A, 58A, 64A) an beiden Reifenbreitenrichtungsseiten der Aufnahmevertiefung (32, 42, 58, 64) berühren, **dadurch gekennzeichnet, dass**
der Reifen (10, 40, 50, 60, 70) ferner eine Decklage (72) umfasst, die durch Beschichten einer Vielzahl von Deckkorden mit Kautschuk (25, 27, 57), der sich von dem Wulstabschnitt (12) zu dem Seitenabschnitt (14) erstreckt, geformt wird und eine Außenfläche des Seitenabschnitts (14) bedeckt.

2. Reifen (10, 40, 50, 60, 70) nach Anspruch 1, wobei eine Tiefe (D) der Aufnahmevertiefung (32, 42, 58, 64) nicht größer ist als eine Dicke (T) der Verstärkungslage (28, 52, 62).

3. Reifen (10, 40, 50, 60, 70) nach Anspruch 2, wobei die Tiefe (D) der Aufnahmevertiefung (32, 42, 58, 64) eine Länge entlang der Reifenradialrichtung von einer Innenumfangsfläche der Verstärkungslage (28, 52, 62) zu einem Reifenradialrichtungs-Innenseitenendabschnitt (26A) des Verstärkungskords (26, 56) überschreitet.

4. Reifen (10, 40, 50, 60, 70) nach einem der Ansprüche 1 bis 3, wobei die Verstärkungslage (28, 52, 62) durch Wickeln des kautschukbeschichteten Verstärkungskords (26, 56) in einer Reifenumfangsrichtung, um ein Spiralmuster zu bilden, geformt wird.

5. Reifen (10, 40, 50, 60, 70) nach Anspruch 4, wobei, von der Reifenradialrichtungaußenseite des Scheitelabschnitts (16) aus gesehen, die Wandflächen der Vertiefung (32A, 58A, 64A) in Bezug auf die Reifenumfangsrichtung in die gleiche Richtung geneigt sind wie der Verstärkungskord (26, 56).

## Revendications

1. Bandage pneumatique (10, 40, 50, 60, 70) comprenant:
un élément de cadre bandage pneumatique circulaire (17) formé à partir d'un matériau de résine et incluant une partie talon (12), une partie latérale (14) continue avec un côté extérieur de la partie talon (12) dans la direction radiale du bandage pneumatique, et une partie de couronne (16) continue avec un côté intérieur de la partie latérale (14) dans la direction de la largeur du bandage pneumatique;
une couche de renforcement (28, 52, 62) prévue au niveau du côté extérieur de la partie de couronne (16) dans la direction radiale du bandage pneumatique, et formée en recouvrant d'un caoutchouc (25, 27, 57) un câble de renforcement (26, 56) s'étendant dans une direction coupant la direction de la largeur du bandage pneumatique; et
un évidement de logement (32, 42, 58, 64) qui est formé dans la partie de couronne (16) et qui s'étend dans une direction circonférentielle du bandage pneumatique, avec au moins une partie circonférentielle interne (28A, 52A) de la couche de renforcement (28, 52, 62) étant logée dans l'évidement de logement (32, 42, 58, 64) et avec les faces latérales (28B) de la couche de renforcement (28, 52, 62) en contact avec les faces des parois de l'évidement (32A, 58A, 64A) sur les deux côtés de l'évidement du logement (32, 42, 58, 64) dans le sens de la largeur du bandage pneumatique, **caractérisé en ce que**
le bandage pneumatique (10, 40, 50, 60, 70) comprend en outre une couche de couverture (72) qui est formée en recouvrant une pluralité de câbles de couverture avec du caoutchouc (25, 27, 57) qui s'étendent à partir de la partie de talon (12) jusqu'à la partie latérale (14), et recouvrant une face externe de la partie latérale (14).

2. Bandage pneumatique (10, 40, 50, 60, 70) selon la revendication 1, dans lequel une profondeur (D) de l'évidement de logement (32, 42, 58, 64) n'est pas supérieure à une épaisseur (T) de la couche de renforcement (28, 52, 62).

3. Bandage pneumatique (10, 40, 50, 60, 70) selon la revendication 2, dans lequel la profondeur (D) de l'évidement de logement (32, 42, 58, 64) dépasse une longueur suivant la direction radiale du bandage pneumatique à partir d'une face circonférentielle interne de la couche de renforcement (28, 52, 62) jusqu'à une partie d'extrémité latérale interne (26A) dans la direction radiale du bandage pneumatique du câble de renforcement (26, 56).

4. Bandage pneumatique (10, 40, 50, 60, 70) selon l'une quelconque des revendications 1 à 3, dans lequel la couche de renforcement (28, 52, 62) est formée en enroulant le câble de renforcement recouvert de caoutchouc (26, 56) dans un sens circonférentiel du bandage pneumatique pour former un motif en spirale.

5. Bandage pneumatique (10, 40, 50, 60, 70) selon la revendication 4, dans lequel, vu depuis le côté externe de la partie de couronne (16) dans la direction radiale du bandage pneumatique, les faces des parois de l'évidement (32A, 58A, 64A) sont inclinées dans la même direction que le câble de renforcement (26, 56) par rapport à la direction circonférentielle du bandage pneumatique.
